# EUROPÄISCHE PATENTSCHRIFT

(11) **EP 3 213 393 B1**
(45) Veröffentlichungstag und Bekanntmachung des Hinweises auf die Patenterteilung: **26.02.2020**
(21) Anmeldenummer: 15775732.9
(22) Anmeldetag: 09.10.2015
(51) Int. Cl.: H02K 3/34

(54) **ELEKTRISCHE MASCHINE MIT EINER NUTISOLATION UND VERFAHREN ZU DEREN HERSTELLUNG**
ELECTRICAL MACHINE HAVING A GROOVE INSULATION AND METHOD FOR THE PRODUCTION THEREOF
MACHINE ÉLECTRIQUE COMPORTANT UNE ISOLATION D'ENCOCHE ET PROCÉDÉ DE FABRICATION CORRESPONDANT

(30) Priorität: 28.10.2014 DE 102014221938
(43) Veröffentlichungstag der Anmeldung: 06.09.2017
(73) Patentinhaber: SEG Automotive Germany GmbH, 70499 Stuttgart (DE)
(72) Erfinder: KERSTEN, Eike-Christian, Shanghai 201206 (CN)
(74) Vertreter: Steinbauer, Florian
(86) Internationale Anmeldenummer: PCT/EP2015/073454
(87) Internationale Veröffentlichungsnummer: WO 2016/066404

(56) Entgegenhaltungen:
- EP-A1- 2 518 865
- DE-A1- 19 520 332
- DE-C- 587 773
- GB-A- 788 520
- US-A1- 2002 047 486
- US-A1- 2004 263 021
- US-A1- 2005 146 238
- US-A1- 2014 042 836

## Beschreibung

Die Erfindung betrifft eine elektrische Maschine sowie ein Verfahren zur Herstellung einer Nutisolation.

### Stand der Technik

Elektrische Maschinen, die als Motoren oder Generatoren einsetzbar sind, besitzen in Nuten einliegende Wicklungen, die mittels Isolationspapier oder Isolationsfolie gegenüber dem Stator oder dem Rotor der elektrischen Maschine isoliert sind. Um einen möglichst hohen Füllgrad für die Wicklungen in den Nuten zu erhalten, wird angestrebt, dass das Isolationspapier möglichst dünn ist, jedoch sollten die mechanischen Eigenschaften der Nutisolation dadurch möglichst nicht eingeschränkt werden.

Aus der DE 195 20 332 A1 ist eine Nutisolation aus kalandriertem Kunststoffpapier bekannt, welches im Wesentlichen U-förmig gefaltet ist und aus einem feuchtigkeitsabsorbierenden, dielektrisch hochwertigen Kunststoff besteht. Diese bekannte Nutisolation wird durch heißpressen aus einer Kunststoffpapierlage hergestellt.

Weiterhin ist aus der DE 26 14 073 A1 ein Verfahren zur Herstellung einer Nutisolation aus Schichtpressstoff für rotierende elektrische Maschinen bekannt, mit dem Trägerbahnen in einem Schenkel der Nutisolation mittels Verstärkungslagen verstärkt werden. Die Verstärkungslagen werden zwischen harzgetränkte Trägerbahnen eingefügt und bei einem darauffolgenden Pressvorgang so verpresst, dass eine hohlraumfreie Nutisolation entsteht. Eine derart aufgebaute Nutisolation mit zusätzlich eingebrachten Verstärkungsschichten ist in der Herstellung sehr aufwändig.

Aus der US 2004/0263021 A1 ist eine elektrische Maschine mit einer dreischichtigen Nutisolation bekannt, bei der die mittlere Schicht an gegenüberliegenden Seitenrändern dicker ausgebildet ist, als im Bereich dazwischen. Alle drei Schichten sind aus thermoplastisch verformbarem Material, beispielsweise Ultem oder PEEK ausgebildet.

Aus der GB 788520 ist eine zweischichtige Nutisolation für eine elektrische Maschine bekannt, bei der eine Schicht aus Polyethylenterephthalat und die andere Schicht aus Papier ausgebildet ist.

### Offenbarung der Erfindung

Die elektrische Maschine mit den Merkmalen des Anspruchs 1 besitzt eine Nutisolation, die wenigstens eine Isolierschicht hat, die an gegenüberliegenden Seitenrändern dicker ausgebildet ist als im Bereich zwischen den gegenüberliegenden Seitenrändern. Es ist sehr vorteilhaft, die Nutisolation als Folie mit wenigstens zwei Schichten auszubilden, wobei zumindest eine der Schichten durch Anwendung von Druck und/oder Wärme plastisch verformbar ist. Dabei ist wenigstens eine der Schichten zumindest im Wesentlichen durch Anwendung von Wärme und/oder Druck in ihrer Dicke nicht veränderbar, sodass diese nicht veränderbare Schicht ihre Isoliereigenschaften bei der fertig hergestellten Nutisolation in vollem Umfang beibehält. Für die in ihrer Dicke durch Anwendung von Wärme und Druck nicht veränderbare Schicht wird vorzugsweise eine Isolierschicht aus Papier oder einem anderen druckstabilen Material verwendet. Eine mit einer solchen Isolierschicht ausgebildete Nutisolation besitzt einerseits sehr gute elektrische Isoliereigenschaften und besitzt andererseits auch eine hohe mechanische Stabilität, insbesondere im Bereich der verstärkten Seitenränder.

Dadurch wird einerseits erreicht, dass im Bereich der Seitenränder eine hohe mechanische Stabilität besteht und andererseits im dazwischen ausgebildeten Bereich die Nutisolation verhältnismäßig dünn ausgebildet sein kann, um möglichst wenig Platz in Anspruch zu nehmen. Dadurch ergibt sich ein vergrößerter Freiraum für die von der Nutisolierung umgebene Wicklung. Damit kann eine höhere Wicklungsdichte in der Nut erreicht werden, gegenüber einer herkömmlichen Ausführung, bei der eine einheitlich dicke Nutisolation verwendet wird. Die erfindungsgemäße Nutisolation lässt sich außerdem sehr einfach durch Kalandrieren aus einer Folienbahn herstellen, wobei der dünnere Bereich der Nutisolation vorzugsweise durch Anwendung von Wärme und Druck aus einer zunächst durchgängig gleich dicken Folie hergestellt wird.

Die Nutisolation ist vorzugsweise derart in eine Nut am Stator oder Rotor einer elektrischen Maschine eingesetzt, dass die Seitenränder der jeweiligen Nutöffnung zugewandt sind. Dadurch wird in diesem Bereich eine höhere mechanische Stabilität und somit eine entsprechend gute Haltefunktion für die in etwa c-förmig von der Nutisolation umschlossenen Wicklungsdrähte erreicht.

Die Nutisolation besteht vorzugsweise aus wenigstens einer durch Kalandrieren plastisch verformbaren Isolierschicht. Damit kann die Nutisolation durch das bereits erwähnte Kalandrieren auf sehr einfache Weise hergestellt werden. Grundsätzlich besteht aber auch die Möglichkeit, dass die Nutisolation wenigstens eine anderweitig verformbare Isolierschicht hat, wobei die Verformung beispielsweise durch einen Prägestempel unter Anwendung von hohem Druck und/oder Wärme erfolgt, um im Bereich zwischen den Seitenrändern eine dünnere Schichtstärke für die Nutisolation zu erhalten.
Bevorzugt ist vorgesehen, dass die wenigstens eine plastisch verformbare Isolierschicht aus Polyethylen besteht. Versuche haben ergeben, dass mit diesem Material die Anwendung eines Kalandrierprozesses sehr vorteilhaft möglich ist.

Besteht die Nutisolation aus insgesamt drei Schichten, so kann die plastisch verformbare Isolierschicht zwischen zwei plastisch nicht verformbaren Isolierschichten einliegen. Beispielsweise kann sehr vorteilhaft eine plastisch verformbare Isolierschicht aus Polyethylen zwischen zwei Papierschichten einliegen, die aus herkömmlichem Isolierpapier bestehen. Eine derart aufgebaute Nutisolation besitzt sowohl eine sehr hohe mechanische Stabilität als auch sehr gute elektrische Isoliereigenschaften. Außerdem wird erfindungsgemäß ein vergrößerter Freiraum in der Nut geschaffen, in welchem die Wicklungsdrähte von der Nutisolation umschlossen einliegen.

Mit den Merkmalen des Anspruchs 9 wird ein Verfahren zur Herstellung einer Nutisolation angegeben, mit dem aus einer Folie durch Kalandrieren eine Nutisolation hergestellt werden kann, die verstärkte Seitenränder hat und im Bereich zwischen den Seitenrändern eine an die jeweiligen Isolationsanforderungen angepasste dünne Materialstärke haben kann.

Die Nutisolation wird vorzugsweise aus einer von einer Rolle abgezogenen zwei- oder mehrschichtigen Folie hergestellt, wobei die Folie einem Kalander zugeführt wird. Durch das Kalandrieren wird der Bereich zwischen den Seitenrändern derart plastisch verformt, dass dieser Bereich eine dünnere Materialstärke erhält als an den Seitenrändern. Von der kalandrierten Folie werden dann Teilstücke abgeschnitten, die in Nuten einer elektrischen Maschine mit rundem oder linearem Lamellenschnitt als Nutisolation einsetzbar sind.

Der Kalandriervorgang kann so durchgeführt werden, dass die plastisch verformbare Isolierschicht nach dem Kalandriervorgang eine gewünschte Materialstärke hat. Wie dünn die Nutisolation zwischen den Seitenrändern ausgebildet werden kann, hängt insbesondere von den Anforderungen an die in diesem Bereich erforderlichen mechanischen und elektrischen Eigenschaften der Nutisolation ab. Durch die Verwendung einer mehrschichtigen Folie für die Nutisolation kann eine vorgegebene elektrische Isoliereigenschaft sehr einfach dadurch vorgegebenen und beibehalten werden, indem beispielsweise eine oder zwei Isolierschichten verwendet werden, die beim Kalandrierverfahren ihre elektrischen Isolierungseigenschaften nicht verändern. Als Isolierschichten sind hierfür Papierschichten aus Isolierpapier sehr gut geeignet, da diese eine gute Flexibilität und eine gute Druck- und Wärmestabilität besitzen.

Die Erfindung wird nachfolgend anhand von in der Zeichnung dargestellten Ausführungsbeispielen näher erläutert.

Es zeigen:
Figur 1 eine Teilansicht eines Stators einer elektrischen Maschine,
Figur 2 eine aus einer Isolierschicht bestehende Folie, von der zur Verwendung als Nutisolation Teilstücke abtrennbar sind,
Figur 3 bis Figur 5 Verfahrensabschnitte zur Herstellung einer dreischichtigen Nutisolation aus einer dreischichtigen Folienbahn,
Figur 6 eine zweischichtige Folienbahn vor einer plastischen Verformung und
Figur 7 die zweischichtige Folienbahn von Figur 6 nach einer plastischen Verformung.

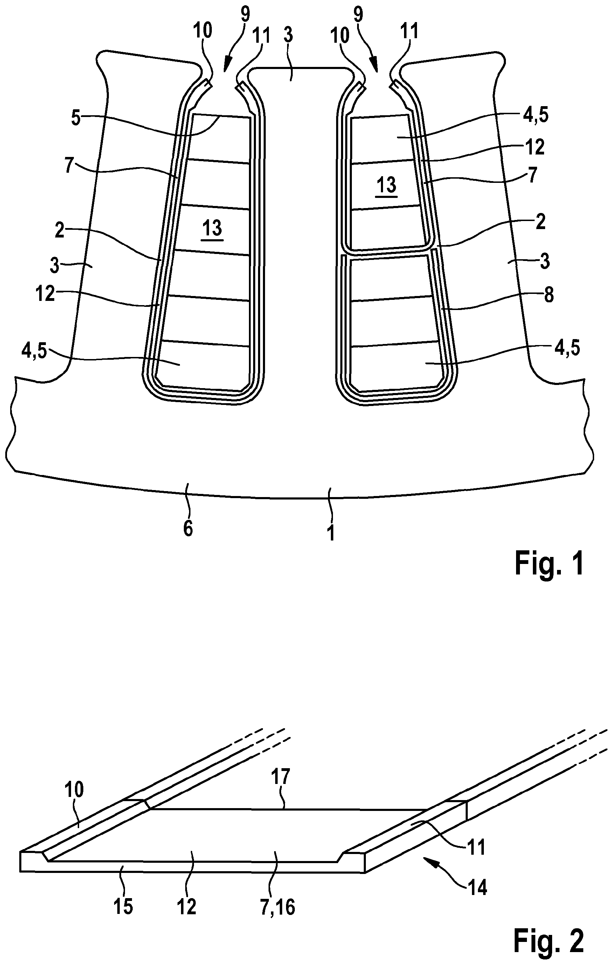

Figur 1 zeigt einen Ausschnitt aus dem Querschnitt eines Stators einer elektrischen Maschine. Der Stator 1, der einen hier nicht dargestellten Rotor einer elektrischen Maschine ringförmig umschließt, besitzt eine Vielzahl von Nuten 2, die von seitlichen Zähnen 3 begrenzt werden. In den Nuten 2 liegen Wicklungen 4, bestehend aus Wicklungsdrähten 5, ein. Der Stator 1 besteht im Wesentlichen aus einer Vielzahl von aneinander liegenden ringförmigen und gezahnten Statorblechen 6, die ein Blechpaket und damit die Zähne 3 und die Nuten 2 bilden.

Die Wicklungen 4 sind gegenüber dem Blechpaket 6 des Stators 1 durch jeweils eine im Querschnitt etwa c-förmig ausgebildete Nutisolation 7 elektrisch isoliert. Eine sich nur bis zur Mitte der Nut erstreckende Nutisolation 8 hat einen u-förmigen Querschnitt.

Die Nutisolationen 7 besitzen an ihrer nach oben weisenden Öffnung 9 verstärkte Seitenränder 10, 11, sodass die Nutisolationen 7 in diesem Bereich entsprechend mechanisch verstärkt sind. Der zwischen den Seitenrändern 10, 11 sich erstreckende Bereich 12 hat eine dünnere Materialstärke, sodass ein möglichst großer Freiraum 13 zur Aufnahme der Wicklungen 4 entsteht. Insbesondere ist vorgesehen, dass die Nutisolationen 7 mit verstärkten Seitenrändern 10, 11 bei einem Stator 1 Anwendung finden, der ein zunächst flaches, vorzugsweise quaderförmiges bzw. im wesentlichen quaderförmiges, Ständereisen aus geschichteten Lamellen aus Weicheisen mit Nuten 2 auf einer Seite umfasst (vgl. auch grundsätzlich die Offenbarung der WO 01/54254 A1), wobei in einem späteren Schritt in die Nuten 2 eine Wicklung eingesetzt wird und nachfolgend dieses flache Ständereisen durch Rundbiegen zu einem ringförmigen Ständer geformt wird. In diesem Zusammenhang werden durch Rundbiegen die Formen der Nuten 2 im flachen Zustand des Ständereisens (Ausgangsform der Nuten 2) so verändert, so dass die Öffnungen 9 der Nuten 7 schmaler werden. Dabei entsteht in Richtung zu den Leitern bzw. Wicklungsdrähten 5 der Wicklungen 4 in einer Nut 2 und damit von den zur Nut 2 gerichteten Seitenwänden eines Zahn 3 zum Beispiel etwas Druck. Insbesondere, dann, wenn die Wicklungsdrähte 5 nicht ideal in einer Nut liegen und damit ein Stapel der Wicklungsdrähte 5 in der Nut 2 höher als eine minimale Höhe ist, kann es passieren, dass auf den in Figur 1 obersten Wicklungsdraht 5 durch den die Öffnung 9 definierenden Zahnkopf Kraft auf den obersten Wicklungsdraht 5 ausgeübt wird. In einer solchen Situation ist es vorzugsweise vorgesehen, dass dann die verstärkten Seitenränder 10, 11 bzw. zumindest ein verstärkter bzw. dicker. Bzw. dickerer Seitenrand 10 oder 11 zwischen den obersten Wicklungsdraht 5 und den Zahnkopf zu liegen kommt beziehungsweise angeordnet ist. Vorzugsweise wird dadurch eine Flächenpressung zwischen dem obersten Wicklungsdraht 5 und dem Zahnkopf kleiner ausfallen als wenn zwischen dem obersten Wicklungsdraht 5 und dem Zahnkopf lediglich ein unverstärkter Seitenrand angeordnet wäre.

In Figur 2 ist eine Folienbahn 14 dargestellt, die aus einer plastisch verformbaren Isolierschicht 15 besteht. Die Folienbahn hat Seitenränder 10, 11 mit einer größeren Materialstärke als der dazwischenliegende Bereich 12. Um nun eine Nutisolierung 7 von der Folienbahn 14 abzutrennen, kann ein entsprechendes Teilstück 16 von der Folienbahn 14 entlang der Linie 17 abgeschnitten werden. Dieses Teilstück 16 kann dann in eine Nut 2 eines Stators 1 als c-förmige Nutisolation 7 eingesetzt werden, wie dies in Figur 1 dargestellt ist.

In Figur 2 ist der Übersichtlichkeit wegen die Materialstärke der Folienbahn 14 größer dargestellt. Besteht die Folienbahn 14 aus einer Polyethylenschicht, so kann der dünnere Bereich 12 beispielsweise eine Dicke von 40µm haben, während die Seitenränder 10, 11 eine Dicke von beispielweise 100µm haben können.

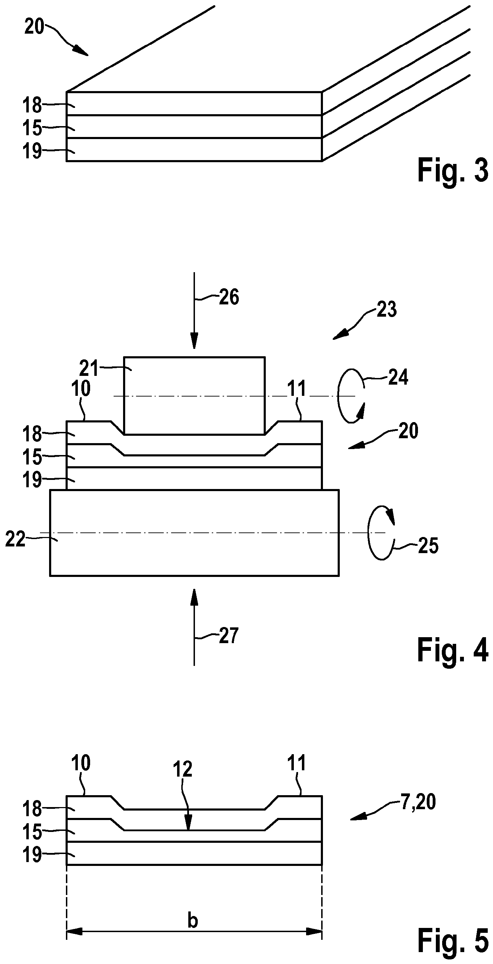

Anhand der Figuren 3 bis 5 wird nun das Verfahren zur Herstellung einer Nutisolation 7 (Figur 5) beschrieben, die aus drei Isolierschichten 15, 18, 19 besteht.

Als Ausgangsmaterial wird eine dreischichtige Folie 20 verwendet, die in Figur 3 dargestellt ist und aus einer plastisch verformbaren Isolierschicht 15 sowie aus hochfestem Papier besteht, welches die Isolierschichten 18 und 19 bildet. Im Ausführungsbeispiel sollen die aus Papier bestehenden Isolierschichten 18, 19 jeweils eine Stärke von 60µm haben, während die aus Polyethylen bestehende Isolierschicht 15 eine Stärke von 50µm hat.

Die Folie 20 wird, wie in Figur 4 schematisch dargestellt, zwischen Walzen 21, 22 eines Kalanders 23 durch Anwendung von Wärme und Druck plastisch verformt, sodass im Bereich zwischen den Seitenrändern 10, 11 eine dünnere Materialstärke entsteht. Bei dem angewendeten Kalandrierverfahren drehen sich die Walzen 21, 22 gegenläufig, wie dies durch die Pfeile 24, 25 angedeutet ist. Der beim Kalandrieren angewendete Anpressdruck der beiden Walzen 21, 22 wird durch Pfeile 26, 27 dargestellt.

Nach der plastischen Verformung durch Kalandrieren, wobei Wärme und Druck auf die Folie 20 ausgeübt wurden, hat diese die in Figur 5 dargestellte Querschnittsform erhalten. Die plastisch verformbare Isolierschicht 15 hat im Bereich 12 zwischen den beiden Seitenrändern 10, 11 nun eine dünnere Materialstärke als an den Seitenrändern 10, 11. Die beiden anderen Isolierschichten 18, 19 haben ihre Materialstärke über die gesamte Breite zumindest weitestgehend beibehalten. Die obere Isolierschicht 18 hat sich jedoch beim Kalandrieren an die geänderte Form der mittleren Isolierschicht 15 angepasst, sodass der mittlere Bereich zwischen den Seitenrändern 10, 11 der Folie 20 nunmehr eine geringere Materialstärke hat, wie dies bei der Nutisolation 7 von Figur 1 und Figur 2 der Fall ist. Von der Folie 20, wie sie in Figur 5 dargestellt ist, können nun Teilstücke abgeschnitten werden, die dann als Nutisolation 7 verwendbar sind.

Zu den Figuren 3 bis 5 wird angemerkt, dass auch hier die Proportionen von Materialstärke zur Breite der Nutisolation 7, wie bei Figur 2, nicht den tatsächlichen Verhältnissen entsprechen. Die Breite der Nutisolation 7 ergibt sich aus der jeweiligen Dimension der Wicklung, die von der Nutisolation 7 umschlossen werden soll. Beispielsweise kann die Breite b der Nutisolation 7 von Figur 5 etwa 1cm bis 10cm betragen, während deren Materialstärke im mittleren Bereich zwischen den Seitenrändern 10, 11 z. B. nur 0,1 bis 0,2mm betragen kann.

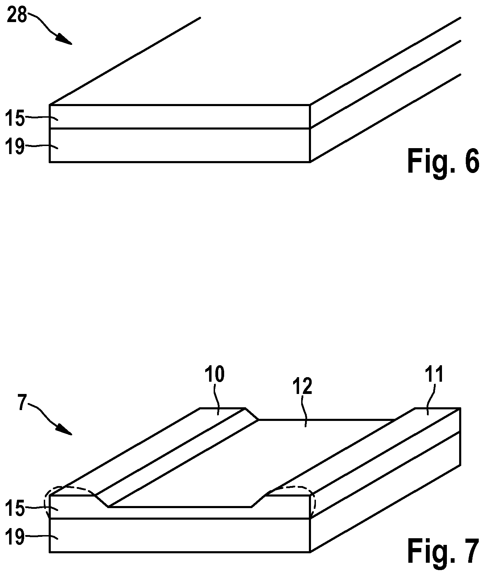

Figur 6 zeigt eine aus zwei Isolierschichten 15, 19 bestehende Folie 28, bei der die Isolierschicht 15 aus einem plastisch verformbaren Kunststoffmaterial besteht. Die Isolierschicht 19 besteht aus einem hochfesten Papier, bei dem es sich um ein herkömmliches Isolierpapier handeln kann.

Durch ein Kalandrierverfahren, wie es in Figur 4 dargestellt ist, kann aus der Folie 28 von Figur 6 eine Nutisolation 7 hergestellt werden, die in Figur 7 dargestellt ist. Die Nutisolation 7 ist im mittleren Bereich 12 plastisch verformt worden, sodass hier eine dünnere Materialstärke besteht als an den Seitenrändern 10, 11. Mit unterbrochenen Linien sind Auswölbung an den Seitenrändern 10, 11 angedeutet, die beim Kalandrieren durch die dabei erfolgende Materialverdrängung an der plastisch verformbaren Isolierschicht auftreten können. Die festgestellten Auswirkungen im den Randbereichen sind in der Regel jedoch verhältnismäßig gering, sodass in den Randbereichen keine Nachbearbeitung an der Nutisolation 7 erforderlich ist.

## Patentansprüche

1. Elektrische Maschine mit einer Nutisolation (7), die als Folie (20, 28) mit wenigstens einer Isolierschicht (15, 18, 19) ausgebildet ist und in Nuten (2) einliegende Wicklungen (4) einer elektrischen Maschine umgibt, wobei die Nutisolation (7) als wenigstens zweischichtige Folie (28) mit einer ersten plastisch verformbaren Isolierschicht (15) und einer zweiten sich in ihrer Materialstärke unter Anwendung von Druck nicht veränderbaren Isolierschicht (19) besteht, und dass wenigstens eine durch Kalandrieren oder durch einen linearen Pressvorgang plastisch verformbare Isolierschicht (15) der Nutisolation (7) an gegenüberliegenden Seitenrändern (10, 11) dicker ausgebildet ist als im Bereich (12) zwischen den gegenüberliegenden Seitenrändern (10, 11).

2. Elektrische Maschine nach Anspruch 1, bei der die Sei-tenränder (10, 11) der in einer Nut (2) einliegenden Nutisolation (7) der Öffnung (9) der Nut (2) zugewandt sind.

3. Elektrische Maschine nach einem der Ansprüche 1 oder 2, bei der die plastisch verformbare Isolierschicht (15) aus Polyethylen oder einem anderen Kunststoffmaterial besteht.

4. Elektrische Maschine nach einem der vorhergehenden Ansprüche, bei der die Nutisolation (7) aus zwei wärmefesten und druckstabilen flexiblen Isolierschichten (18, 19) besteht, zwischen denen die plastisch verform-bare Isolierschicht (15) einliegt.

5. Elektrische Maschine nach einem der vorhergehenden Ansprüche, bei der die plastisch verformbare Isolierschicht (15) mittels Wärme und mechanischem Druck zwischen den beiden Seitenrändern (10, 11) auf eine dünnere Schichtstärke als die Schichtstärke an den Seitenrändern (10, 11) verformt ist.

6. Elektrische Maschine nach einem der vorhergehenden bei der die Nutisolation (7) wenigstens eine wärme- und druckstabile Isolierschicht (18; 19) aus Papier hat.

7. Elektrische Maschine nach einem der vorhergehenden Ansprüche, bei der wenigstens ein dicker ausgebildeter Seitenrand (10, 11) der Isolierschicht (15) der Nutisolation (7) zwischen einem obersten Wicklungsdraht (5) und einem Zahnkopf eines Zahns (3) angeordnet ist.

8. Verfahren zur Herstellung einer Nutisolation für den Einsatz in einer elektrischen Maschine nach einem der vorhergehenden Ansprüche, **dadurch gekennzeichnet, dass** eine Folie (14, 20, 28) mit wenigstens einer wärmefesten und druckstabilen Isolierschicht (18,19) und mit wenigstens einer plastisch verformbaren Isolierschicht (15) durch Kalandrieren zwischen zwei gegenüberliegenden Seitenrändern (10, 11) auf eine dünnere Schichtstärke gebracht wird.

9. Verfahren nach Anspruch 8, **dadurch gekennzeichnet, dass** beim Kalandrieren Wärme und Druck auf eine zwischen Walzen (21, 22) eines Kalanders (23) durchlaufende Folie (20, 28) ausgeübt wird, und dass von der Folie (20, 28) nach dem Kalandrieren Teilstücke (16) abgeschnitten werden, die als Nutisolation (7) in elektrische Wicklungen (4) aufnehmende Nuten (2) einer elektrischen Maschine einsetzbar sind.

## Claims

1. Electrical machine comprising a groove insulation (7) which is in the form of a foil (20, 28) with at least one insulating layer (15, 18, 19) and surrounds windings (4) of an electrical machine which are inserted in grooves (2), wherein the groove insulation (7) is in the form of an at least two-layer foil (28) comprising a first plastically deformable insulating layer (15) and a second insulating layer (19) whose material thickness is not changeable by applying pressure, and in that at least one insulating layer (15) of the groove insulation (7) which is plastically deformable by calendering or by a linear pressing process is thicker on opposite side edges (10, 11) than in the region (12) between the opposite side edges (10, 11).

2. Electrical machine according to claim 1, in which the side edges (10, 11) of the groove insulation (7) inserted in a groove (2) face the opening (9) of the groove (2).

3. Electrical machine according to any one of claims 1 or 2, in which the plastically deformable insulating layer (15) consists of polyethylene or another plastic material.

4. Electrical machine according to any one of the preceding claims, in which the groove insulation (7) consists of two heat-resistant and pressure-stable flexible insulating layers (18, 19), between which the plastically deformable insulating layer (15) is located.

5. Electrical machine according to any one of the preceding claims, in which the plastically deformable insulating layer (15) is deformed by means of heat and mechanical pressure between the two side edges (10, 11) to a thinner layer thickness than the layer thickness at the side edges (10, 11).

6. Electrical machine according to any one of the preceding claims, in which the groove insulation (7) comprises at least one heat- and pressure-stable insulating layer (18; 19) consisting of paper.

7. Electrical machine according to any one of the preceding claims, in which at least one thicker formed side edge (10, 11) of the insulating layer (15) of the groove insulation (7) is disposed between an uppermost winding wire (5) and a tooth head of a tooth (3).

8. Method for manufacturing a groove insulation for the application in an electrical machine according to any one of the preceding claims, **characterized in that** a foil (14, 20, 28) comprising at least one heat-resistant and pressure-stable insulating layer (18, 19) and at least one plastically deformable insulating layer (15) is brought to a thinner layer thickness between two opposite side edges (10, 11) by calendering.

9. Method according to claim 8, **characterized in that**, during calendering, heat and pressure are applied to a foil (20, 28) passing between rolls (21, 22) of a calender (23), and **in that**, after calendering, sections (16) are cut from the foil (20, 28) which are insertable as groove insulation (7) in grooves (2) of an electrical machine which receive electrical windings (4).

## Revendications

1. Machine électrique comportant un isolant d'encoche (7) qui est configuré sous la forme d'un film (20, 28) ayant au moins une couche isolante (15, 18, 19) et qui entoure des enroulements (4) placés dans des encoches (2) d'une machine électrique, dans laquelle l'isolant d'encoche (7) se présente sous la forme d'au moins un film à deux couches (28) ayant une première couche d'isolation plastiquement déformable (15) et une seconde couche d'isolation (19) dont l'épaisseur de matière ne peut pas changer en appliquant une pression, et en ce qu'au moins une couche d'isolation (15) de l'isolant d'encoche (7) plastiquement déformable par calandrage ou par une opération de pressage linéaire est formée sur des bords latéraux opposés (10, 11) plus épaisse que dans la zone (12) située entre les bords latéraux opposés (10, 11).

2. Machine électrique selon la revendication 1, dans laquelle les bords latéraux (10, 11) de l'isolant d'encoche (7) placé dans une encoche (2) sont dirigés vers l'ouverture (9) de l'encoche (2).

3. Machine électrique selon l'une des revendications 1 ou 2, dans laquelle la couche d'isolation plastiquement déformable (15) est constituée de polyéthylène ou d'une autre matière plastique.

4. Machine électrique selon l'une des revendications précédentes, dans laquelle l'isolant d'encoche (7) est constituée de deux couches d'isolation (18, 19) résistantes à la chaleur et stables à la pression, entre lesquelles est placée la couche d'isolation plastiquement déformable (15).

5. Machine électrique selon l'une des revendications précédentes, dans laquelle la couche d'isolation plastiquement déformable (15) est déformée au moyen de chaleur et d'une pression mécanique entre les deux bords latéraux (10, 11) jusqu'à une épaisseur de couche plus fine que l'épaisseur de couche au niveau des bords latéraux (10, 11).

6. Machine électrique selon l'une des revendications précédentes, dans laquelle l'isolant d'encoche (7) a au moins une couche d'isolation (18, 19) en papier résistante à la chaleur et stable à la pression.

7. Machine électrique selon l'une des revendications précédentes, dans laquelle le au moins un bord latéral (10, 11) formé plus épais de la couche d'isolation (15) de l'isolant d'encoche (7) est agencé entre un fil d'enroulement supérieur (5) et une tête de dent d'une dent (3).

8. Procédé de fabrication d'un isolant d'encoche destiné à être utilisé dans une machine électrique selon l'une des revendications précédentes, **caractérisé en ce qu'**une épaisseur de couche plus fine d'un film (14, 20, 28) ayant au moins une couche d'isolation (18, 19) résistante à la chaleur et stable à la pression et au moins une couche d'isolation plastiquement déformable (25) est obtenue par calandrage entre deux bords latéraux opposés (10, 11).

9. Procédé selon la revendication 8, **caractérisé en ce que** lors d'un calandrage, de la chaleur et une pression sont exercées sur un film (20, 28) passant entre les cylindres (21, 22) d'une calandre (23), et **en ce qu'**après le calandrage, des pièces (16) sont découpées à partir du film (20, 28), lesquelles pièces peuvent être utilisées comme isolant d'encoche (7) dans des rainures (2) recevant des enroulements électriques (4) d'une machine électrique.
